# EUROPEAN PATENT APPLICATION

(11) **EP 1 039 773 A2**
(43) Date of publication of application: **27.09.2000**
(21) Application number: 00440076.8
(22) Date of filing: 17.03.2000
(51) Int. Cl.: H04Q 11/00

(54) **Optimized optoelectrical network element for optical transport networks**

(30) Priority: 23.03.1999 IT MI990582
(71) Applicant: ALCATEL, 75008 Paris (FR)
(72) Inventor: Cicchese, Guido Manlio, 20124 Milano (IT); Miriello, Virgilio, 20059 Vimercate (Milano) (IT); Lometti, Alberto, 23807 Merate (Lecco) (IT)
(74) Representative: Colombo, Stefano Paolo

(57) **Abstract**

An optimized optoelectrical network element for optical transport networks. The telecommunication network element according to the present invention comprises WDM or DWDM terminals, network protection means and means providing wavelength interchange and is characterized in that said network protection means include at least one functional block, and said means providing wavelength interchange comprise at least one main matrix, the at least one functional block and the at least one main matrix, being physically separated one to each other.

## Description

The present invention relates to an optimized optoelectrical network element for optical transport networks such as, for instance, an optical ADM or an optical CROSS-CONNECT. This element is particularly suited for trunk and metro and access telecommunication optical networks.

Some of the main functions of the optical layer, that is the optical section of an optical transport network, are routing and protecting the Optical Channel (OCH). In order to implement these functions, an amount of connections need to be established in a different Optical Network Element (NE). These connections are provided through the OCH sub-network connection function of the Optical Channel Section, simply named Connection Matrix, contained in the Optical Layer and defined in the *ITU-T draft Recommendation G.872* (Architecture and Functionality of the OTN).

The desirable properties of a suitable OCH sub-network connection function are related both to routing flexibility as, for example, optical channel interchange, full and non-blocking connectivity, scalability, extra traffic management (for the optimization of total available bandwidth) and to survivability needs, as for example Optical Channel Sub-Network Protection, Multiple Section Protection and protected optical channels selection.

Taking into account the above connection needs, the implementation of a OCH connection matrix using the today currently available optical technology can be realized with high costs and using complex solutions in term of structure and size.

Several embodiments of telecommunication network elements are known. In particular, the existing arrangements are:
i) fixed OADMs (Optical Add-Drop Multiplexers);
ii) only partially reconfigurable OADMs;
iii) wavelength selective OADMs or OXCs (Optical Cross Connects), briefely "OADM/OXCs"; or
iv) full OADM/OXCs including wavelength conversion, based on optical matrices (spatial, or lambda-spatial, or pure spatial), or on (relatively small) electrical crosspoint high speed matrices.

Telecommunication network optical element designers are generally faced with the problem of providing a small size element having a high flexibility and a reduced cost. While the above known arrangements are rather effective in specific network configurations, each of them seeks to optimize only one feature between cost, size and flexibility.

In view of the above prior art, it is the main object of the present invention designing a highly flexible, manageable and cost effective optical network element having a reduced size and which is provided with a relatively large number of Inputs/Outputs (briefely "I/Os").

A further object is designing a flexible optical network element (briefly "NE") able to support effective network protection schemes (linear, ring and meshed networks like in SDH (Synchronous Digital Hierarchy) ADM/XCs).

A still further object is conceiving a NE able to replace existing WDM (Wavelength Division Multiplexer) or DWDM (Dense Wavelength Division Multiplexer) terminals or in-line amplifiers without the need for redesigning the link and/or the span of the network.

The basic idea of the present invention is making use of a suitable combination of optical switching matrixes and electrical high speed crosspoint matrices, and providing a suitable architectural partitioning in order to satisfy simultaneously all basic system requirements, especially those concerning protection which are specific of an OADM.

The present invention basically provides separation of network protection functions from more general wavelength interchange. This results, especially in the OADM case, in allowing the use of optical switching matrices without any multicast function inside.

The invention will become promptly clear from the following detailed description, provided as a non limiting and purely exemplifying example of some possible embodiments, to be read with reference to the annexed sheets of drawings in which the various figures show:
- Fig. 1 schematically shows a two-fiber OADM-like network element;
- Fig. 2 schematically shows a four-fiber OADM-like network element;
- Fig. 3 schematically shows an OXC-like network element with four DWDM ports with **n** wavelengths and four DWDM ports with **r** wavelengths each;
- Fig. 4 schematically shows a two-fiber DWDM terminal with OTS level protection;
- Fig. 5 schematically shows a four-fiber DWDM terminal with OTS level protection;
- Fig. 6 schematically shows a two-fiber DWDM terminal with OMS level protection;
- Fig. 7 schematically shows a four-fiber DWDM terminal with OMS level protection;
- Fig. 8 schematically shows a two-fiber DWDM terminal with "mixed" (OTS/OMS) level protection;
- Fig. 9 schematically shows a four-fiber DWDM terminal with "mixed" (OTS/OMS) level protection;
- Fig. 10 schematically shows an example of **Xa** functional block at λⱼ of Fig. 1, e.g. for a two-fiber OADM-like network element as in Fig. 1;
- Fig. 11 schematically shows an embodiment of configuration with all the tributaries having direct external access for a two-fiber OADM-like network element (Fig. 1);
- Fig. 12 schematically shows an embodiment of the **j**^{th} functional block **Xc**;
- Fig. 13 schematically shows the Optical Channel sub-network connection and protection & optical multiplex section protection in an optical network; and
- Fig. 14 is a functional model showing the various layers.

Naturally, in the various figures, the same o similar reference signs will be used for indicating the same or functionally equivalent blocks.

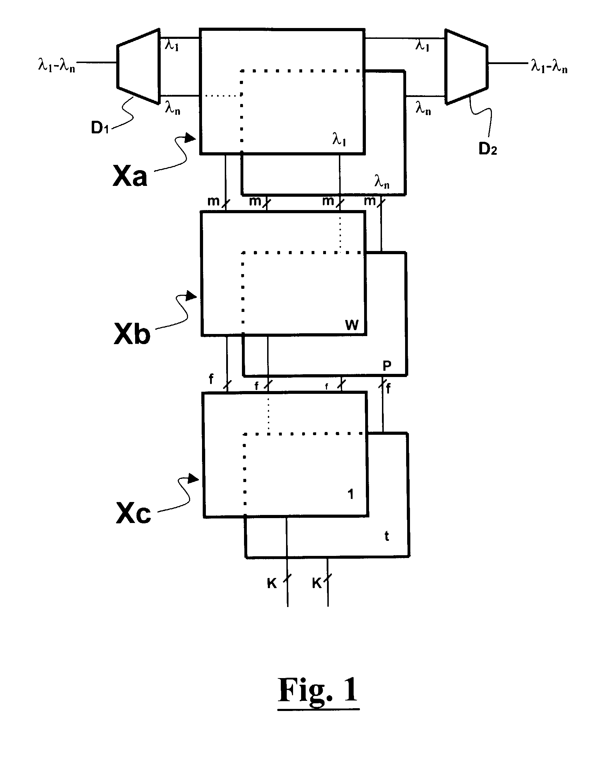

With reference first to Figures 1-3, an optoelectrical network element **NE** according to the present invention comprises: a number of WDM or DWDM terminals (**D1** to **D4** and **D'1** to **D'4**), a number of functional blocks, designed **Xa**, featuring principally network protection functions, a number of main matrices **Xb**, providing general wavelength interchange and a number of **t** blocks **Xc** performing tributary protection functions. In the following each of the above mentioned blocks will be disclosed in a detailed way with reference to the annexed figures.

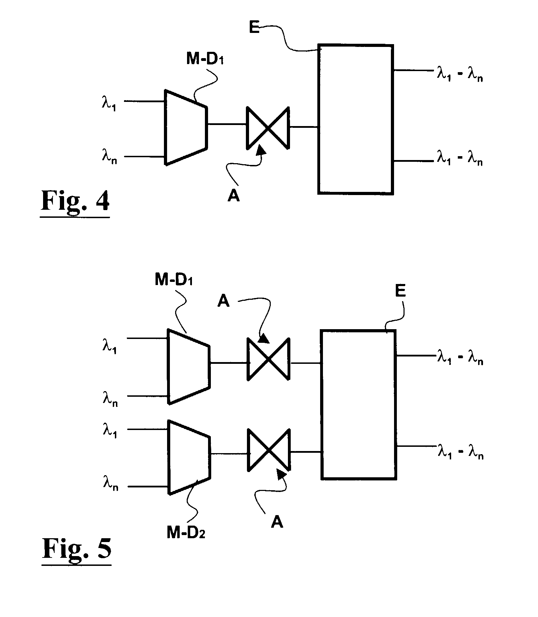

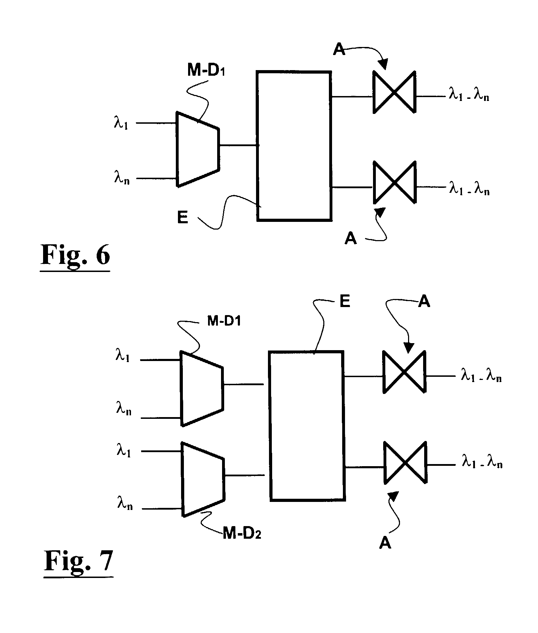

The WDM or DWDM terminals (**D1** to **D4** and **D'1** to **D'4**) are well known from technical literature and are commercially available products, which can also be arranged in two-fiber or four-fiber, briefly 2F or 4F, configurations. According to the present invention, they include also functional blocks (designed **E** in Figures 4-9) composed of sets of optical switches (similarly to the well-known electronic counterparts) and performing Optical Multiplex Section (OMS) or Optical Transport Section (OTS) level protections (1+1, 1:1, OMS-SPRING) placed at OTS/OMS level (Figs. 4-7).

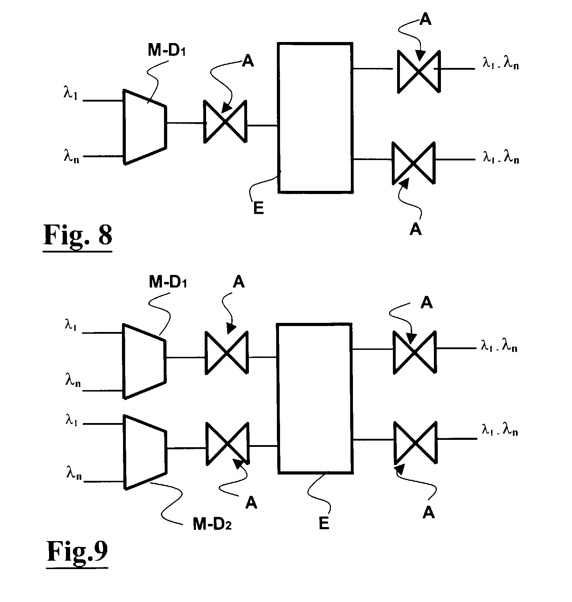

It is also presented the idea of including functional blocks **E** located in the interstage of multistage Optical Amplifiers (Figs. 8 and 9, designed as "mixed" OTS/OMS level protection) as to limit transmission impairments due to **E** block insertion losses. In Figs. 4-9 only a schematic representation of a WDM or Dense WDM terminal is shown. It fundamentally comprises Mux/Demux blocks, designed **M-D**_{**1**}, **M-D**_{**2**}, optical amplifiers, designed as **A** and the above referenced functional blocks **E** performing OTS, OMS and mixed OTS/OMS protection.

Advantages of the "mixed" version are the capability to replace existing (D)WDM terminals or in-line amplifiers not featuring network protection without re-engineering the link or span, and a lower cost than the OMS one, in case multistage Optical Amplifiers are already used.

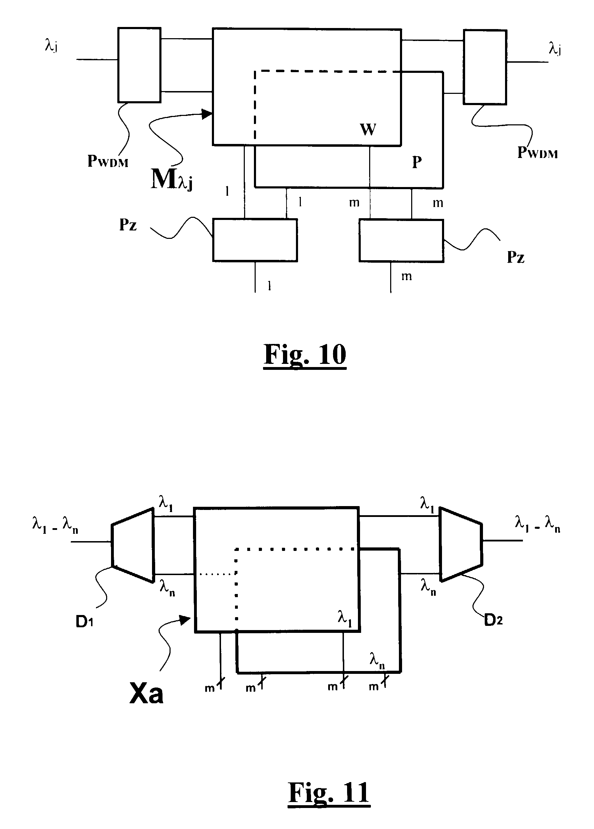

With reference to Figs. 1, 2 and 10, the OADM-like network element according to the present invention comprises a set of up to **n** two-fiber (or four-fiber) Optical Network ADM-like functional blocks (**Xa**) (in Fig. 10 the 2F (two-fiber) embodiment is shown, the man skilled in the art will easily conceive the corresponding 4F (four-fiber) embodiment).

Functional block **Xa** basically comprises colored wavelength Optical/Electrical I/O ports (designed **PWDM**) connected to a crosspoint high speed electrical matrix **M** (possibly protected 1+1 EPS ) to perform protection at optical channel level (protection selectivity). Naturally, more than one Optical Network ADM-like block will preferably be grouped in the same shelf, as to easily support a plurality of different network protection schemes (1+1, 1:1, 1:N, MS-SPRING-like, drop & continue for ring interconnect, broadcasting), and a partial wavelength interchange.

The matrix **M** (Fig. 10) is well known from technical literature in the various configurations and well known also from commercially available products.

With reference again to Fig. 10, the matrix **M** is connected also to Optical/electrical I/O ports, designed **Pz**, which typically are of the "Short Reach" type (e.g. S16.1 / S64.1) for providing access to the main matrix **Xb** to be disclosed hereinbelow. As an alternative, any interface could also be used.

As a further alternative, direct interconnection to the outside of the equipment, i.e. direct tributary access, can be also foreseen for at least a part of the signals, and in this case, with Fig. 11 representing for simplicity the case of complete direct tributary access in a 2F OADM, all the different optical interfaces listed in the relevant standards can be equipped. These interfaces will typically include short and long haul interfaces, although any kind of interface can also be used.

The number **m** of **PZ** ports is generally different from the number of **PWDM** ports, to allow for:
- different drop capacities for the OADM;
- possible EPS/APS protection schemes of these Inputs/Outputs;
- different switching function partitioning between the matrices **M** and **Xb** (e.g. for drop & continue for ring interconnection combined with wavelength interchange - see below for a detailed description of **Xb** matrix -).

Interconnection between I/O ports **PWDM** and matrix **M** could be implemented either via high speed digital electrical signals or in an optical way e.g. through short reach or any other kind of I/O ports located in blocks **PWDM** and **M**.

The I/O ports **PWDM** will be of the "3R" (Regeneration, Reshaping and Retiming) type with SDH/SONET termination/monitoring of RS/MS (Regeneration Section/Multiplex Section), and, possibly, SDH/SONET synchronization, or "3R" type with "enhanced TDM frame" as to allow more advanced RS/MS-ADM/DXC functionalities, or also "2R" (Regeneration and Reshaping) type. The same alternatives apply to ports **PZ**. In this connection, reference should be made to Italian Patent application MI98A001366, filed in the name of the same applicant as this application and the content of which is believed incorporated herein.

As an alternative, they can be also of the 2R type for the regional and metropolitan area (shortly "metro") OADM terminals, where one has to cope with a variety of bit rates and frames in the client layers and networks of limited sizes.

As mentioned above, the OADM network element according to the present invention comprises one (or also two EPS protected 1+1) main matrice **Xb** based either on high speed cross point electrical technology or on optical technology in order to support more general wavelength interchange (and possibly for supporting also broadcasting and drop & continue for ring interconnection with general wavelength interchange).

It is to be noted that the choice of separating network protection functions (blocks **Xa**) from more general wavelength interchange (blocks **Xb**) has the big advantage, particularly in the OADM case, of allowing the use for **Xb** of optical switching matrices without any multicast function inside.

This results in the possibility of using optical space matrices for **Xb** with low intrinsic insertion losses and consequent hardware simplicity; at the same time OADM functionalities are kept, including wavelength interchange (thanks to **Xb** ) and (partial) multicasting (thanks to the corresponding properties of **Xa** and **Xc** as disclosed above), naturally in addition to network protections (**Xa** and **Xc**). Also, in the previous hypothesis, drop & continue for ring interconnections together with general wavelength interchange could be supported, provided that the dimensions of matrix **Xa, Xb** (and **Xc**) are sufficient.

In case of crosspoint technology, the matrix will preferably be of the "2R" type, in order to allow for a wide client signal transparency.

For the I/O interfaces between each **Xa** and **Xb** matrices, **m PZ**-type ports (**2m PZ**-type ports in case of 1+1 EPS protection) could be used (see Figures 1-3).

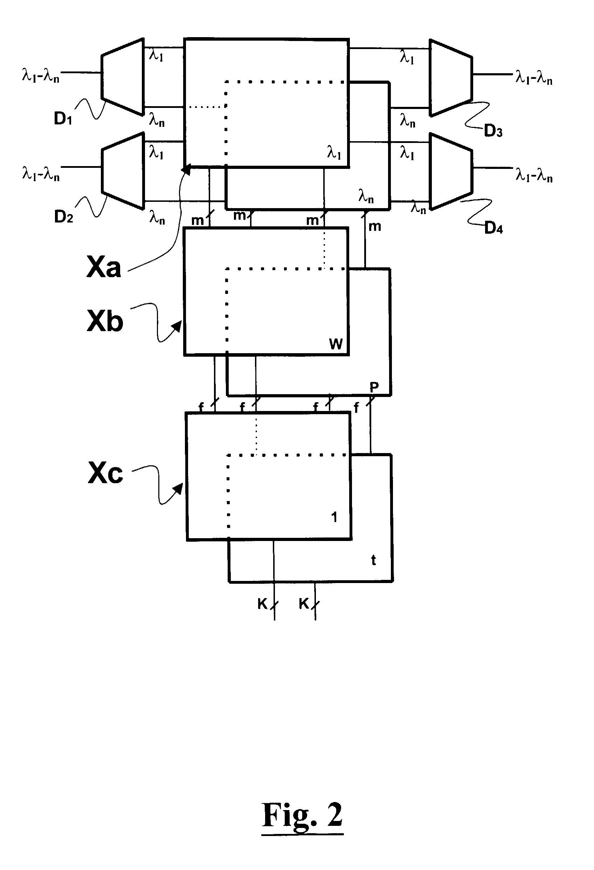

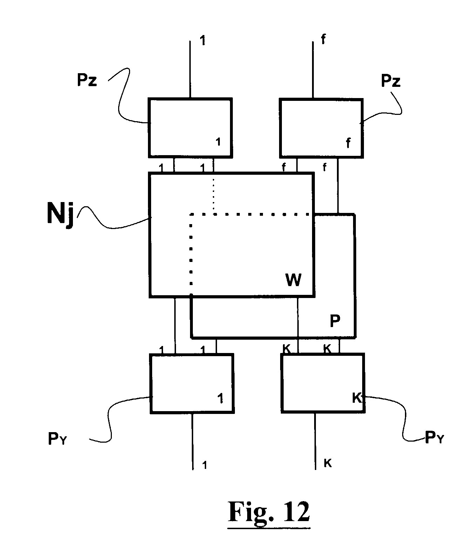

With reference to Figures 1 and 2 (OADM case), a further set of **t** blocks **Xc**, connected to the main matrices **Xb**, performing tributary protection functions is provided. Each of them will be two-fiber or four fiber Optical Network ADM-like or SDH/SONET-like, or RS/MS - ADM/DXC-like, or 2R type, or IP router-like or ATM switch-like functional blocks, consisting (Fig. 12) basically of **f** (or **2f** ) Optical/Electrical I/O ports **PZ,**, typically of the I/O or Short Reach type, towards the main matrix, a crosspoint high speed electrical matrix **N** (possibly 1+1 protected), and **k** output ports **PY**, of the same type as for **PZ**.

For the other **f** I/O interfaces (**2f** in case of 1+1 EPS protection) between **Xb** and each **Xc**, one can choose between any standard I/Os according to the performances of the main matrices **Xb** for protection and switching in the different technologies, and system requirements (particularly, the kind of tributary protection).

More than one **Xc** block will preferably be grouped in the same shelf sharing a bigger matrix in order to support easily a variety of different protection schemes and network configurations (1+1, 1:1, 1:N, MS-SPRING-like, drop & continue for ring interconnection, broadcasting, tributary-to-tributary), and partial wavelength interchange of tributaries. A schematic block diagram of functional block **Xc** is shown in Fig. 12.

Especially in case of "Metro" applications, also multiples and mixed type ports, based both on synchronous or asynchronous electrical multiplexing/demultiplexing, could be equipped.

All the blocks composing **Xc**, are either already described in the previous paragraphs either commercially known and thus they will not described further in greater details.

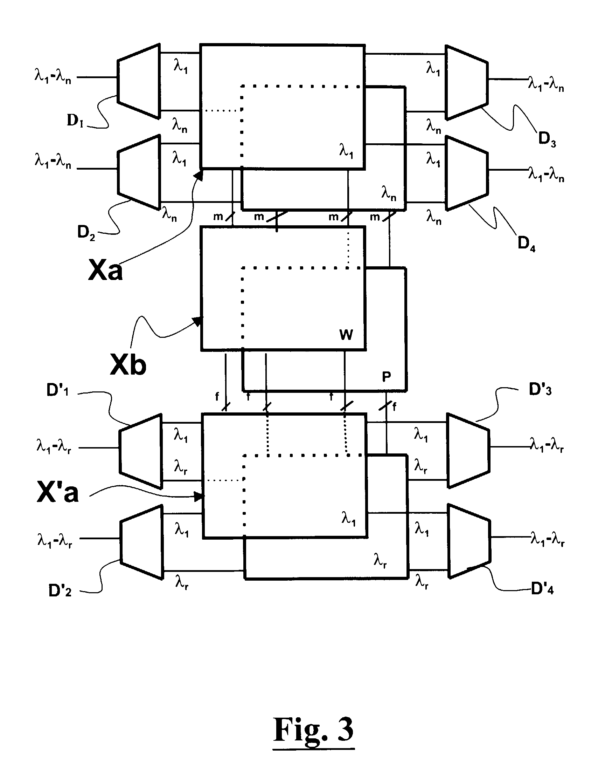

With reference to Fig. 3, the case of an OXC (Optical Cross-Connect) will be discussed below. In this case four, or more than four, WDM or Dense WDM ports will be allowed.

The same functional blocks **Xa** and **D** as above discussed could be used for the two additional DWDM ports but they will be designed as **X'a** and **D'** to allow for a different matrix size and number of wavelength per DWDM port (**r** wavelengths in the embodiment of Fig. 3).

Also more complex architectures could be envisaged, cascading in sequences, according to the same general principles and rules, blocks type **Xa, Xb, Xc, X'b, X'a,** to get OXC with SDH or ATM or IP cores, always possibly with integrated DWDM I/O.

The advantages provided by the present invention will be now clear in view of the above description, and particularly:
- simultaneous support in an optimized way from a cost / size point of view, the mixed optical and electrical arrangement is more feasible and cheaper than the electrical approach;
- reduction of necessary Electrical/Optical conversions;
- OMS/OTS protection provided;
- Optical Channel protection (different schemes are available in a flexible way);
- drop & continue for ring interconnection and, at least partially, broadcast;
- growth of the number of I/O, also via upgrade to transparent optical main matrices;
- it replaces WDM terminals / in-lines without link reengineering; and
- limited size Metro (transparent) optical networks, via 2R I/O can be provided.

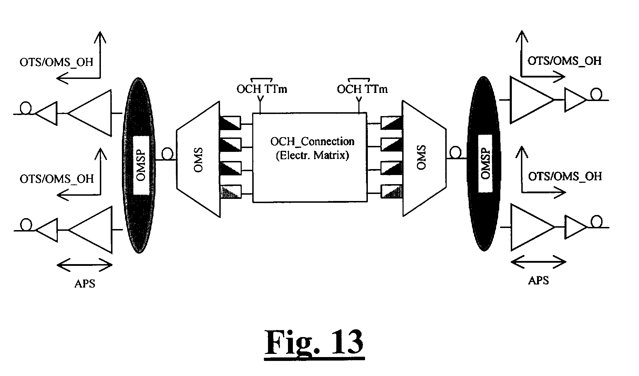

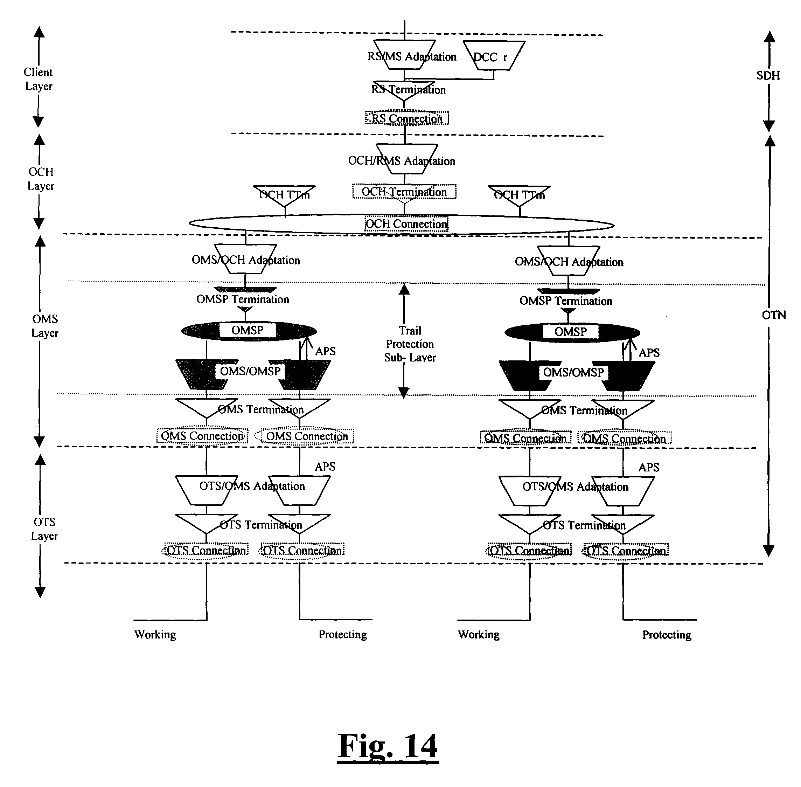

In addition to the above, performing sub-network connection in the electrical domain, allows providing optical channel protection without any constrains and according to the above mentioned Recommendation G.872. The protection mechanism uses the connection supervision information associated to the OCH, electrically transported in the OTN and monitored through trail information associated to the OCH, electrically transported in the OTN and monitored through trail termination non intrusive monitoring functions (Fig. 13). Besides, the section trail protection is implemented in the optical domain using an optical section protection function that has to be introduced, through a trail protection sub-layer, in the OMS layer. A peer functional model is shown in Fig. 14. The electrical matrix according to the present invention can be therefore used in the optical nodes (OADM/OXC) and can operate in the optical domain according to the principles set forth in current ITU-T Reccomendations.

The above proposed OADM/OXC architecture, being based on a wavelength approach, is open and fully compatible with a number of different functionalities for each wavelength or group of wavelengths. In particular it is possible to use for some groups of wavelengths arrangements with a reduced cost and/or reduced functionalities and management as, for example, fixed pass through, fixed OADM and partially reconfigurable OADM.

It is evident that the man skilled in the art will envisage some other embodiments and variations which will be all covered by the following annexed claims, the true spirit of invention being limited only by them.

## Claims

1. Optoelectrical telecommunication network element (**NE**) comprising WDM or DWDM terminals (**D1-D4; D'1-D'4**), network protection means and means providing wavelength interchange, characterized in that said network protection means include at least one functional block (**Xa**), and said means providing wavelength interchange comprise at least one main matrix (**Xb**), the at least one functional block (**Xa**) and the at least one main matrix (**Xb**), being physically separated one to each other.

2. Network element (**NE**) according to claim 1, characterized in that said at least one functional block (**Xa**) further provides at least partial wavelength interchange.

3. Network element (**NE**) according to claim 1 or 2, characterized in that it further comprises means (**Xc**) performing tributary protection connected to said means (**Xb**) through Optical/Electrical I/O ports (**PZ**).

4. Network element (**NE**) according to claim 1, characterized in that it further comprises further functional blocks (**X'a, D'**) to allow for OXCs with different matrix size and number of wavelengths per each DWDM port.

5. Network element (**NE**) according to claim 1, characterized in that the WDM or DWDM terminals (**D1-D4, D'1-D'4**) comprise also functional blocks (**E**) composed of sets of optical switches and performing OMS, OTS or OTS/OMS level protection being placed at OTS/OMS level i.e. in an interstage of multistage Optical Amplifiers for obtaining a mixed OTS/OMS level protection.

6. Network element (**NE**) according to any of claims 1-5, characterized in that said at least one functional block (**Xa**) basically comprises colored wavelength Optical/Electrical I/O ports (**PWDM**) connected to a crosspoint high speed electrical matrix (**M**), preferably protected 1+1 EPS to perform protection at optical channel level.

7. Network element (**NE**) according to claim 6, characterized in that the crosspoint high speed electrical matrix (**M**) is connected also to Optical/Electrical I/O ports (**PZ**), preferably of the short reach type interfaces, for providing access to the main matrix (**Xb**), said I/O ports (**PZ**) coinciding with out interfaces.

8. Network element (**NE**) according to any of claims 3-7, characterized in that the I/O ports (**PZ, PWDM**) are of the "3R" type with SDH/SONET termination of RS/MS and preferably SDH/SONET synchronization, of the "3R" type with enhanced SDH/SONET frame as to allow more advanced RS/MS-ADM/DXC functionalities, "3R" being for regeneration, reshaping and retiming.

9. Network element (**NE**) according to any of claims 1-8, characterized in that said at least one main matrix (**Xb**) is based either on high speed cross point electrical technology or on optical technology in order to support more general wavelength interchange.

10. Network element (**NE**) according to any of claims 1-9, characterized in that said means (**Xc**) performing tributary protection comprise at least one Optical ADM or SDH/SONET/ADM, or RS/MS - ADM/DXC-like, or "2R" type, or IP router-like or ATM switch-like functional blocks, each consisting basically of **f** (or **2f**) Optical/Electrical I/O ports (**PZ**), preferably of the short reach type towards the main matrix, a crosspoint high speed electrical matrix (**N**), and **k** output ports.

11. Optical network comprising one or more of the network elements (**NE**) according any of the above claims 1-10.
